Europäisches Patentamt

European Patent Office

Office européen des brevets

(11) Veröffentlichungsnummer: **0 228 706**
**B1**

(12) **EUROPÄISCHE PATENTSCHRIFT**

(45) Veröffentlichungstag der Patentschrift: **07.11.90**

(51) Int. Cl.⁵: **C 04 B 38/06,** B 01 D 39/00

(21) Anmeldenummer: **86118076.8**

(22) Anmeldetag: **24.12.86**

(54) Verfahren zur Herstellung offenporiger Keramikkörper und nach diesem Verfahren hergestellter Keramikkörper.

(30) Priorität: **03.01.86 DE 3600048**

(43) Veröffentlichungstag der Anmeldung:
**15.07.87 Patentblatt 87/29**

(45) Bekanntmachung des Hinweises auf die
Patenterteilung:
**07.11.90 Patentblatt 90/45**

(84) Benannte Vertragsstaaten:
**AT BE CH DE FR GB LI LU NL SE**

(56) Entgegenhaltungen:
**DE-A-2 453 269**
**US-A-3 090 094**

(73) Patentinhaber: **E. DITTRICH KG "Schlüssel"-**
**Erzeugnisse**
**Lüneburger Strasse 20**
**D-2800 Bremen 44 (DE)**

(72) Erfinder: **Baarsch, Kurt**
**Schwedenschanze 9c**
**D-2808 Achim-Baden (DE)**

(74) Vertreter: **Eisenführ, Speiser & Strasse**
**Martinistrasse 24**
**D-2800 Bremen 1 (DE)**

Courier Press, Leamington Spa, England.

**Beschreibung**

Die Erfindung betrifft ein Verfahren zur Herstellung offenporiger Keramikkörper, bei welchem man auf die Begrenzungsflächen der Poren eines offenporigen Matrix-Körpers eine verfestigbare Keramikmasse aufbringt, diese nachfolgend verfestigt und den Matrix-Körper unter Zurückbleiben eines Keramikkörpers aus verfestigter, offenporiger Keramikmasse entfernt, sowie einen offenporigen Keramikkörper und dessen Verwendung.

Offenporige Keramikkörper, wie sie zum Beispiel aus der US-Patentschrift 3 090 094 bekannt sind, dienen beispielsweise als hitzefeste Filter für geschmolzene Metalle, als hitzefeste Katalysatorträger und für eine Vielzahl anderer Anwendungen, die sich die feine Porenstruktur des Keramikkörpers zunutze machen.

Solche offenporigen Keramikkörper werden üblicherweise gewonnen, indem man einen offenporigen Matrix-Körper aus einem geeigneten, thermisch zersetzbaren oder verflüchtigbarem Material in eine flüssige Keramikmasse eintaucht, die in das offene Porensystem des Matrix-Körpers eindringt und dieses zunächst im wesentlichen ausfüllt. Als flüssige Keramikmasse eignen sich Aufschlämmungen von feinverteilten keramischen Pulvern unter Zusatz von Bindemitteln. Nach möglichst vollständiger Benetzung der Begrenzungsflächen der Matrix-Körperporen wird der Matrix-Körper aus der Keramikmasse entnommen und durch Auspressen oder vergleichbare Verfahren von überschüssiger Keramikmasse befreit. Dabei bleibt eine gewisse Menge Keramikmasse im Inneren des Matrix-Körpers zurück, die die Begrenzungsflächen der Poren in relativ dünner Schicht bedeckt und ansonsten das Poreninnere freiläßt. Nachfolgend wird die Keramikmasse verfestigt, beispielsweise durch Trocknung und nachfolgende Erhitzung, gegebenenfalls bis zum Zusammensintern der Keramikteilchen zu einem im wesentlichen einstückigen Körper. Der Matrix-Körper wird dabei thermisch verflüchtigt oder zersetzt, wobei die Zersetzungsprodukte gasförmig entweichen. Der dabei zurückbleibende Keramikkörper aus verfestigter, offenporiger Keramikmasse wird den genannten Verwendungen zugeführt.

Bei diesem Herstellungsverfahren eines offenporigen Keramikkörpers ergibt sich ein regelloses, im wesentlichen durch die Poren- und Zellwandstruktur des Matrix-Körpers vorgegebenes Keramikskelett, welches den Keramikkörper bildet. Damit sind auch die möglichen Zuführ- und Durchtrittswege beliebiger Fluide vorgegeben und nachträglich praktisch nicht mehr beeinflußbar.

Die Erfindung setzt bei der Erkenntnis an, daß es wünschenswert ist, neben dem im wesentlichen regellosen Porensystem des Keramikkörpers definierte Zuführkanäle für fluide Substanzen vorsehen zu können, die die möglichen Anwendungen des Keramikkörpers wesentlich erweitern würden. Ein Keramikkörper mit definierten Zuführkanälen würde es beispielsweise gestatten, bestimmte Reaktanden in gezielter Weise in das Porensystem einzuführen und dort mit durch das Porensystem fließenden bzw. diffundierenden Reaktionspartnern reagieren zu lassen.

Nun ist es aber aufgrund der Feinheit und hochgradigen Zerbrechlichkeit des den Keramikkörper bildenden Keramikskelettes nur unter Nachteilen möglich, solche Zuführkanäle nachträglich anzulegen. Beim Versuch, solche Zuführkanäle eventuell durch Bohren oder ähnliche Verfahren am fertigen Keramikkörper einzurichten, kommt es zu nicht unerheblichen Zerstörungen des Porensystems, zu Verstopfungen von Poren durch Bohrmehl, Bruchstücke oder ähnliches und gegebenenfalls sogar zur weitgehenden Zerstörung des Keramikkörpers.

Aufgabe der Erfindung ist es daher, ein Verfahren zur Herstellung offenporiger Keramikkörper der eingangs genannten Art zu schaffen, die ohne die geschilderten Nachteile mit definierten Zuführkanälen versehen sind.

Weiterhin ist es Aufgabe der Erfindung, einen offenporigen Keramikkörper zu schaffen, der ohne nennenswerte Störung seines Porensystems mit Zuführkanälen versehen ist. Außerdem ist es Aufgabe der Erfindung, Verwendungsmöglichkeiten für einen solchen Keramikkörper anzugeben.

Zur Lösung dieser Aufgabe weist das Verfahren zur Herstellung offenporiger Keramikkörper der eingangs genannten Art erfindungsgemäß die im kennzeichnenden Teil des Patentanspruchs 1 definierten Merkmale auf.

Indem man den Matrix-Körper vor Aushärten der Keramikmasse mit sich in diesen wenigstens in einer Raumrichtung hinein erstreckenden Filamenten versieht, die man während oder nach Aushärten der Keramikmasse unter Bildung entsprechender Kanäle entfernt, werden ohne nennenswerten Aufwand und ohne Störung des Porensystems des Keramikkörpers die gewünschten Zuführkanäle geschaffen, die das gezielte Einführen von Substanzen in das Innere des Keramikkörpers ermöglichen.

Vorteilhafte weitere Ausgestaltungen des Verfahrens sind in den Unteransprüchen 2 bis 9 beschrieben.

Bevorzugt wird ein offenporiger Matrix-Körper mit Filamenten, vorzugsweise Fäden aus thermisch verflüchtigbarem bzw. zu gasförmigen Produkten zersetzbarem Material versehen. Dabei sind einerseits synthetische Materialien bevorzugt, die sich bei solchen relativ niedrigen Temperaturen verdampfen oder im wesentlichen rückstandslos zersetzen lassen, die unterhalb der zur Entfernung des Matrix-Körpers anzuwenden Temperatur liegen. Es ist aber auch möglich, für die Filamente Materialien zu verwenden, die erst oberhalb der Temperatur entfernbar sind, bei der der Matrix-Körper selber entfernt wird, solange nur die dann aufzubringende Übertemperatur nicht zu einer nachteiligen Beeinflußung des Keramikkörpers führt.

Anstelle thermisch entfernbarer Filamente können auch Drähte, vorzugsweise Metalldrähte, verwendet werden, die nach Verfestigung der Keramikmasse aus dieser auf chemischem Wege herausgelöst oder mechanisch herausgezogen werden. Für mechanisch entfernbare Filamente eignen sich nicht oder schwer benetzbare Kunststoffmaterialien wie etwa Polytetrafluoräthylen (Teflon).

Anstelle der für die meisten Anwendungsfälle ausreichenden Schaffung von Kanälen gleichen Durchmessers können im Bedarfsfall durch Verwendung von Filamenten unterschiedlicher Stärke auch unterschiedliche System von Zuführkanälen geschaffen werden. Die Filamente und damit die im Keramikkörper vorgesehenen Kanäle müssen sich nicht notwendigerweise in derselben Raumrichtung erstrecken, sondern können, zum Beispiel zur Zuführung unterschiedlicher Reaktanden, auch in unterschiedlichen Raumrichtungen verlaufen.

Gegenstand der Erfindung ist weiterhin der in den Ansprüchen 10 und 11 definierte offenporige Keramikkörper, der nach dem in den Ansprüchen 1 bis 9 angegebenen Verfahren herstellbar ist, sowie die Verwendung eines solchen offenporigen Keramikkörpers gemäß den Ansprüchen 12 bis 15.

Im folgenden werden bevorzugte Ausführungsformen der Erfindung anhand der beigefügten Zeichnungen weiter erläutert. Es zeigen:

Fig. 1a — c in schematischer Weise einige Herstellungsstufen eines bekannten offenporigen Keramikkörpers;

Fig. 2 schematisch einen bekannten offenporigen Keramikkörper in der Anwendung;

Fig. 3a + b schematisch zwei Ausführungsformen eines erfindungsgemäßen offenporigen Matrix-Körpers und

Fig. 4 schematisch einen erfindungsgemäßen offenporigen Keramikkörper im Verwendungszustand.

Bei der Herstellung offenporiger Keramikkörper geht man bekanntermaßen von offenporigen Matrix-Körpern aus. Neben der Verwendung von Faserkörpern wie zum Beispiel filzartigen Materialien, werden insbesondere retikulierte, offenporige Kunststoffschäume und hier insbesondere offenporige Polyurethanschäume als Matrix-Körper verwendet.

Fig. 1a zeigt in stark schematisierter Form einen vergrößerten Ausschnitt aus einem solchen, aus Kunststoffschaum gebildeten offenporigen Matrix-Körper 10. Dieser weist durchgehende offene Poren 11 auf, die von aus dem Kunststoffmaterial des Matrix-Körpers bestehenden Wandbereichen 12 definiert sind. Ebenfalls von Wandbereichen aus dem Kunststoffmaterial des Matrix-Körpers gebildet sind nicht durchgehende, sondern vielmehr völlig eingeschlossene gasgefüllte Zellen 13, die nicht mit den offenen Poren 11 kommunizieren.

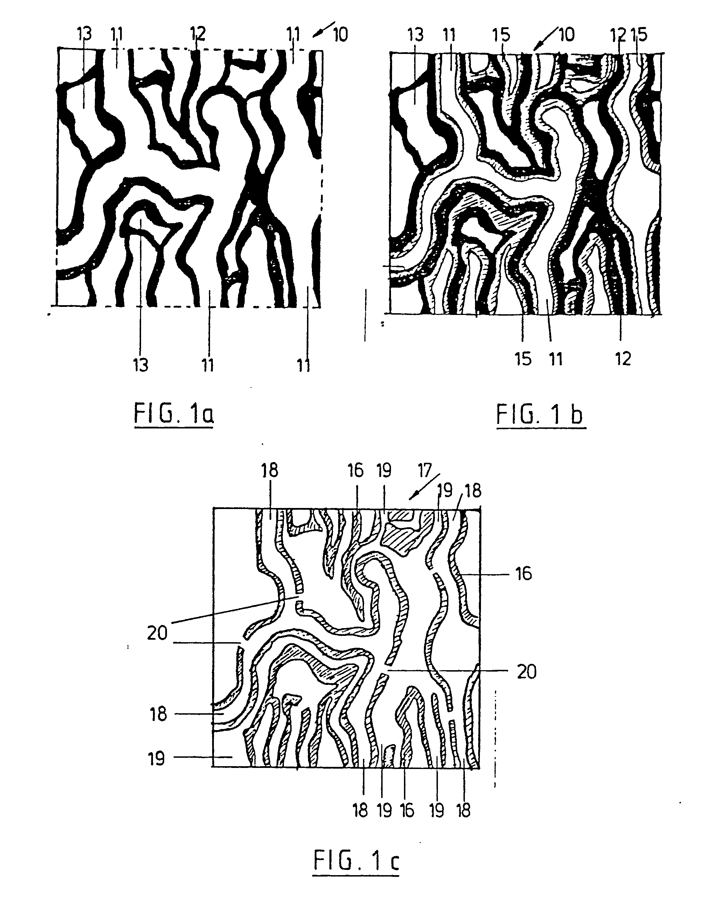

Nach Eintauchen des Matrix-Körpers der Fig. 1a in eine geeignete, flüssige Keramikmasse, insbesondere in eine Aufschlämmung feinteiliger Keramikteilchen, füllen sich die offenen Poren 11 des Matrix-Körpers 10 mit der flüssigen Keramikmasse. Nach Entnahme des Matrix-Körpers 10 aus der Keramikmasse und Entfernen des nicht benötigten Überschusses von Keramikmasse aus den offenen Poren 11, zum Beispiel durch Auspressen des Matrix-Körpers 10, sind im wesentlichen nur noch die inneren Wandbereiche des Matrix-Körpers, also die Begrenzungsflächen der Poren in dünner Schicht mit flüssiger Keramikmasse bedeckt, wie in Fig. 1b gestrichelt angedeutet. Bei entsprechend großer Kapillarwirkung bleiben jedoch einzelne Bereiche der offenen Poren 11, die entsprechend geringen Durchmesser aufweisen, auch nach dem Auspressen noch mit Keramikmasse gefüllt. Es versteht sich, daß die vollständig von Wandbereichen 12 eingeschlossenen Zellen 13 sich nicht mit Keramikmasse füllen.

Nachfolgend wird der in gewünschter Weise mit flüssiger Keramikmasse versehene Matrix-Körper erhitzt, wobei die Keramikmasse verfestigt und, gegebenenfalls bei ausreichender Temperatur unter Sinterung, ausgehärtet wird. Dabei wird die Verflüchtigungs- bzw. Zersetzungstemperatur des Kunststoffmaterials, aus dem der Matrix-Körper 10 besteht, bewußt überschritten, so daß der Matrix-Körper 10 durch Verdampfung oder Zersetzung zu gasförmigen Substanzen entfernt wird. Zurück bleibt ein den Keramikkörper 17 bildendes Keramikskelett 16, das, wie Fig. 1c zeigt, die räumliche Anordnung der offenen Poren 11 des nunmehr nicht mehr vorhandenen Matrix-Körpers 10 im wesentlichen abbildet. Dieses Keramikskelett bildet ein erstes Porensystem 18 durchgehender offener Poren, die mit einem um die Wandstärke des Keramikskeletts 16 verkleinerten Durchmesser den offenen Poren 11 des Matrix-Körpers 10 entsprechen.

Zusätzlich weist der Keramikkörper 17 jedoch noch ein zweites Porensystem 19 auf. Dieses entsteht durch die Entfernung der Wandbereiche 12 des Matrix-Körpers 10, in dem an die Stelle der Wandbereiche 12 ein Hohlraumsystem tritt.

Während das Volumen des ersten Porensystems 18, um den Beitrag der Wandstärke des Keramikskeletts 16 vermindert, dem Volumen der offenen Poren 11 des Matrix-Körpers 10 entspricht, ist das Volumen des zweiten Porensystems 19 des Keramikkörpers 17 zum einen durch den Raumbedarf der Wandbereiche 12 des Matrix-Körpers 10, zum anderen aber zusätzlich durch die nach Entfernung der Wandbereiche 12 nunmehr nicht mehr bestehenden Zellen 13 des Matrix-Körpers 10 bestimmt. Weist der Matrix-Körper 10 besonders viele und/oder besonders umfangreiche Zellen 13 auf, so kann das Gesamtvolumen des zweiten Porensystems 19 ein Vielfaches des Volumens des ersten Porensystems 18 sein.

Bei der thermischen Entfernung des Matrix-Körpers 10 wird dessen Material praktisch vollständig in gasförmige Substanzen umgewandelt. Diese entweichen zum Teil außerhalb des Keramikskeletts 16; zum Teil schaffen sie unter dem entstehenden Druck jedoch auch Durchtrittsöffnungen 20 in den Wandungen des Keramikskeletts 16 und entweichen dann durch die offenen Poren des ersten Porensystems 18. Auf die Bedeutung der dabei entstehenden Durchtrittsöffnungen 20 zwischen dem ersten und dem zweiten Porensystem wird später eingegangen.

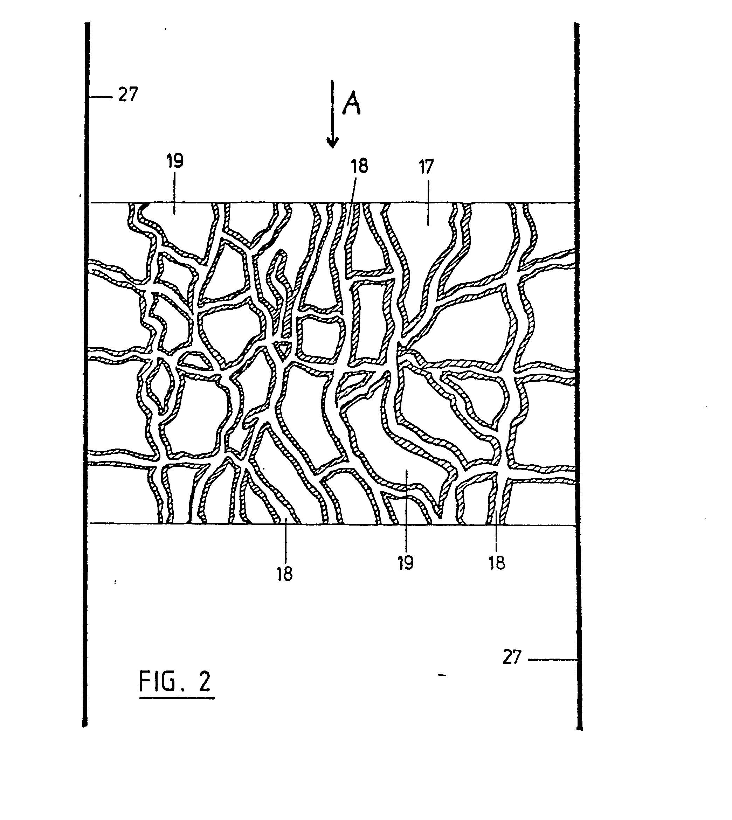

Fig. 2 zeigt eine typische Anwendung eines solchen bekannten Keramikkörpers 17. Der Keramikkörper 17 ist dabei zwischen Wandungen 27 eingeschlossen, so daß nur die in Richtung des Pfeiles A durchlassenden Poren zum Durchtritt einer in Fig. 2 von oben in Richtung des Pfeiles A zugeführten Flüssigkeit oder eines entsprechenden Gases zur Verfügung stehen. Bei den üblicherweise verwendeten Matrix-Körpern ist die Weite des im Keramikkörper 17 erzeugten ersten Porensystems 18 sehr viel größer als die des zweiten Porensystems 19, so daß der Substanzdurchsatz durch den Keramikkörper 17 in Richtung des Pfeiles A im wesentlichen mittels des ersten Porensystems 18 erfolgt.

Der Keramikkörper 17 gemäß Fig. 2 dient beispielsweise der Filterung eines geschmolzenen Metalls, das in Richtung des Pfeiles A zugeführt wird und beim Durchtritt durch die Poren des Keramikkörpers 17 eventuelle Verunreinigungen zurückläßt.

Durch das Eintragen von Verunreinigungen in die offenen Poren des Keramikkörpers 17 kommt es im Betrieb jedoch nach kürzerer oder längerer Zeit zu Verstopfungen, die die Durchlässigkeit des Keramikkörpers 17 zunehmend vermindern und endlich zu dessen Unbrauchbarkeit führen. In diesem Fall muß der Keramikkörper 17 durch Behandlung mit entsprechenden Chemikalien von den Verunreinigungen wieder befreit werden; diese Chemikalien werden anstelle des zu filternden Materials dem Keramikkörper 17 zugeführt, um die Verunreinigungen aus den Poren herauszulösen. Die Einwirkungszeiten bis zur entsprechenden Reinigung der Poren sind lang und der entsprechende Ausfall an Betriebszeit ist erheblich, da die Chemikalien über die verstopften Poren nur langsam eindringen können.

Der Keramikkörper 17 könnte auch zur Reinigung verunreinigter Gase verwendet werden, wenn es möglich wäre, die zur Gaswäsche benötigten Substanzen gezielt so in seine Poren einzuführen, daß sie mit dem zu reinigenden Gas in innige Berührung kommen. Bei dem nur in einer Richtung durchlassenden Keramikkörper 17 bekannter Bauart, wie er in Fig. 2 gezeigt ist, ist eine gleichzeitige Einführung von verunreinigtem Gas und Waschflüssigkeit jedoch nicht wirkungsvoll.

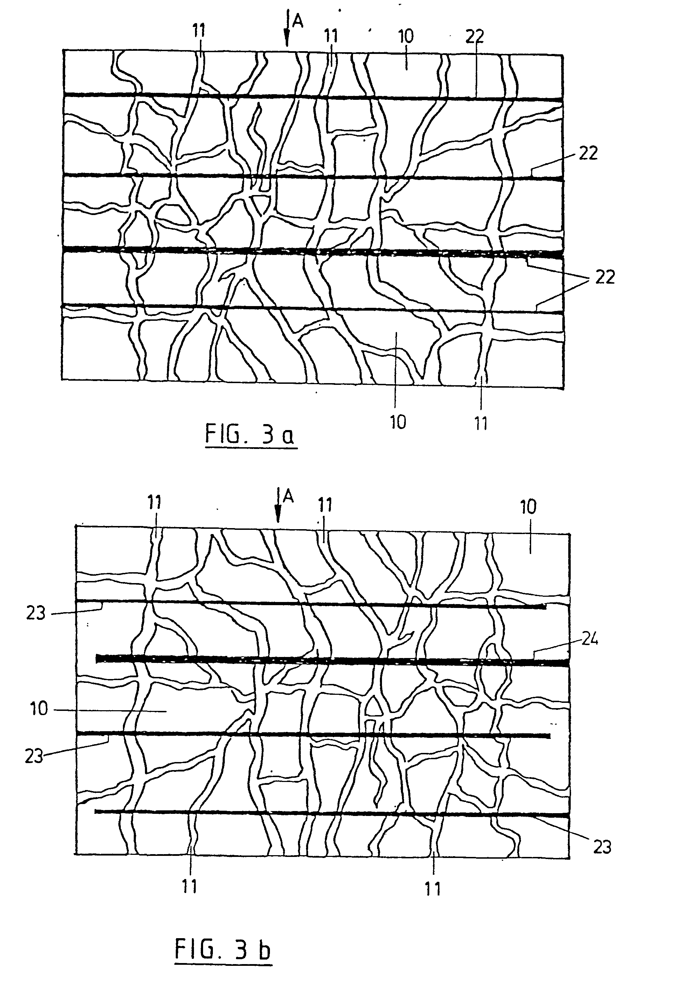

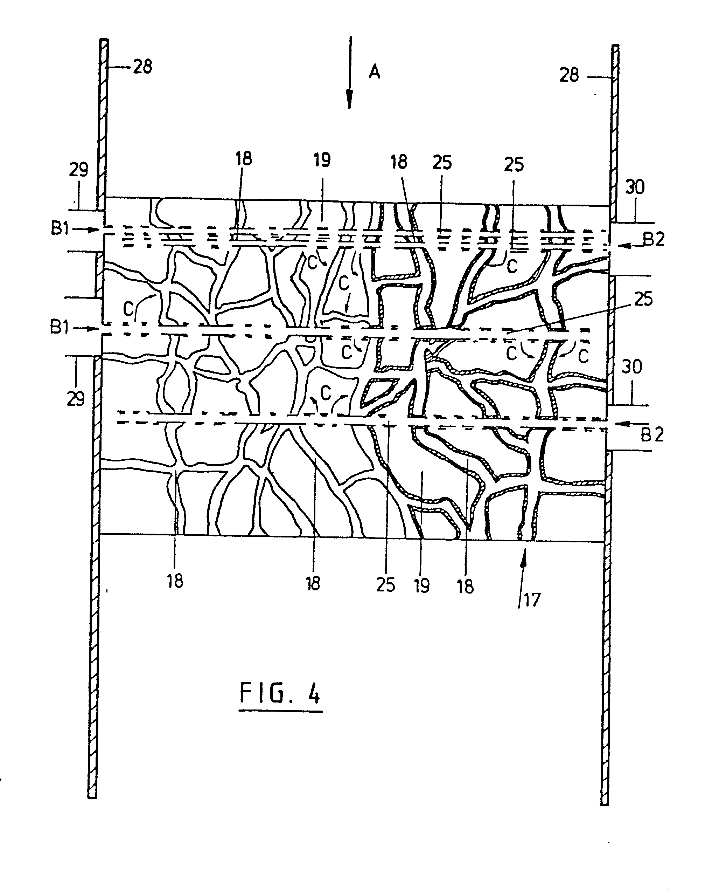

Der Keramikkörper 17 wird daher mit Kanälen 25 versehen, wie sie in Fig. 4 gezeigt sind. Zu diesem Zweck wird der offenporige Matrix-Körper 10, wie Fig. 3a schematisch zeigt, quer zu der für seine spätere Verwendung vorgesehenen Hauptdurchflußrichtung A mit sich in ihn hinein erstreckenden Filamenten versehen.

Im Falle der Fig. 3a handelt es sich dabei um Fäden 22 unterschiedlicher Stärke, die bei der Verwendung eines Matrix-Körpers 10 aus retikuliertem Polyurethanschaum vorzugsweise aus Wolle bestehen. Die Fäden 22 durchziehen den Matrix-Körper 10 in dessen ganzer Breite und schneiden dabei eine Mehrzahl durchgehender offener Poren 11.

Beim Eintauchen des Matrix-Körpers 10 in die flüssige Keramikmasse dringt diese in die durchgehenden offenen Poren 11 ein und benetzt nicht nur deren Begrenzungsflächen, sondern auch die im Bereich der offenen Poren 11 freiliegenden Außenflächen der Fäden 22. Hingegen werden die Fäden 22 nicht von Keramikmasse benetzt, soweit sie sich innerhalb von Wandbereichen 12 des Kunststoffmaterials oder durch geschlossene Zellen 13 erstrecken. Bei der nachfolgenden Entfernung überschüßiger flüssiger Keramikmasse bleibt jeweils im Bereich einer durchgehenden offenen Pore 11 eine Schicht von Keramikmaterial um die Außenfläche des betreffenden Fadens 22 herum zurück, so daß beim nachfolgenden thermischen Entfernen des Matrix-Körpers 10 ein röhrenartiges Keramikskelett-Teil dort zurückbleibt, wo sich der Faden 22 durch die offene Pore 11 erstreckt hat. Dieses Keramikskelett-Teil schließt das Innere des Kanals 25 im wesentlichen gegen eine Kommunikation mit dem Inneren des den offenen Poren 11 des Matrix-Körpers 10 beim nunmehr gebildeten Keramikkörper 17 entsprechenden ersten Porensystems 18 ab, so daß dieses im wesentlichen nicht über die Kanäle 25 zugänglich ist.

Gegenüber dem durch Entfernen der Wandbereiche 12 und Zellen 13 des Matrix-Körpers 10 entstandenen zweiten Porensystem 19 des Keramikkörpers 17 sind die Kanäle 25 jedoch offen, wie in Fig. 4 gestrichelt angedeutet, so daß sie mit dem zweiten Porensystem 19 des Keramikkörpers 17 kommunizieren. Es ist daher möglich, mittels der Kanäle 25 gezielt fluide Substanzen in das zweite Porensystem 19 des Keramikkörpers 17 einzuführen, wie später anhand der Fig. 4 näher erläutert werden wird.

Fig. 3b zeigt eine abgewandelte Ausführungsform des Matrix-Körpers 10, beim dem statt Fäden 22 drahtförmige Filamente 23, 24 so in den Matrix-Körper 10 eingeführt sind, daß sie sich über den größten Teil seiner Breite durch ihn hindurch erstrecken, ihn aber nicht vollständig durchsetzen.

Als Filamente sind hierbei Metalldrähte 23 vorgesehen, die bei der thermischen Entfernung des Matrix-Körpers 10 im Keramikkörper 17 zurückbleiben und nachfolgend durch Auflösung in einer geeigneten Säure aus diesem unter Bildung von Kanälen 25 (Fig. 4) entfernt werden. Außerdem ist als Filament ein Teflonstab 24 verwendet, der nach Verfestigung der Keramikmasse vor deren Sinterung unter Zurücklassung eines Kanals 25 seitlich aus dem Matrix-Körper 10 herausgezogen wird.

Fig. 4 zeigt einen zur Verwendung vorbereiteten Keramikkörper 17 gemäß der Erfindung, der zwischen Wandungen 28 so eingeschlossen ist, daß einem in Richtung des Pfeiles A zugeführten Fluid durchgehende offene Poren seines ersten Porensystems 18 und gegebenenfalls, bei entsprechendem Durchmesser, auch durchgehende offene Poren seines zweiten Porensystems 19 zum Durchtritt durch den Keramikkörper 17 zur Verfügung stehen. Die Wandungen 28 sind mit ersten und zweiten Zuführstutzen 29 und 30 versehen, die jeweils nicht über die gesamte Breite des Keramikkörpers 17 durchgehende Kanäle 25 an ein nicht gezeigtes Zuführsystem anschließen. Dadurch ist es möglich, daß eine erste fluide Substanz $B_1$ über die ersten Zuführstutzen 29 und/ oder eine zweite fluide Substanz $B_2$ über die zweiten Zuführstutzen 30 und die diesen jeweils zugeordneten Kanäle 25 in das Innere des Keramikkörpers 17 eingebracht wird. Da diese Fluide $B_1$ bzw. $B_2$ wegen des weitgehenden Abschlußes der Kanäle 25 gegenüber dem ersten Porensystem 18 nicht direkt in dieses, wohl aber in das zweite Porensystem 19 übertreten, gelangen die zugeführten fluiden Substanzen $B_1$ bzw. $B_2$ im wesentlichen in das zweite Porensystem 19. Von diesem aus ist ein Übertritt der fluiden Substanzen $B_1$ bzw. $B_2$ in das erste Porensystem 18 jedoch deswegen möglich, weil das erste Porensystem 18 mit dem zweiten Porensystem 19, wie Fig. 1c schematisch zeigt, durch einzelne Durchtrittsöffnungen 20 kommuniziert, welche durch die bei der Entfernung des Matrix-Körpers 10 entweichenden Gase geöffnet worden sind. Dieser Vorgang ist in Fig. 4 schematisch durch Pfeile C angedeutet.

Wird dem in Fig. 4 gezeigten Keramikkörper 17 in Richtung des Pfeiles A nun beispielsweise ein verunreinigtes Gas zugeführt, so kann die zur Beseitigung der Verunreinigungen notwendige Waschflüssigkeit $B_1$ und/oder $B_2$ über die ersten und/oder zweiten Zuführstutzen 29 bzw. 30 und zugeordnete Kanäle 25 in das zweite Porensystem 19 des Keramikkörpers 17 eingeleitet werden und tritt dann durch Durchtrittsöffnungen 20 (Fig. 1c) in das erste Porensystem 18 über, in dem im wesentlichen die Strömung des verunreinigten Gases durch den Keramikkörper 17 stattfindet. An den Keramikwandungen des ersten Porensystems 18 niedergeschlagene Verunreinigungen werden so durch Waschflüssigkeit beseitigt, die über die Durchtrittsöffnungen 20 auf die Wandbereiche des ersten Porensystems 18 gelangt. Gleichzeitig findet durch Benetzung der Begrenzungswände des ersten Porensystems 18 mit Waschflüssigkeit eine Kontaktierung des verunreinigten Gases auf einer so großen Gesamtoberfläche statt, daß eine durchgreifende Reinigung des verunreinigten Gases im Inneren des Keramikkörpers 17 ermöglicht wird. Die Waschflüssigkeit läuft nachfolgend über die Poren des ersten und des zweiten Porensystems 18 und 19 nach unten in Fig. 4 ab.

Der erfindungsgemäße Keramikkörper 17 eignet sich, neben der beschriebenen Verwendung zur Reinigung von Gasen, für eine Vielfalt weiterer Verwendungen.

So ist es beispielsweise möglich, ihn zur Filterung verunreinigter metallischer Fluide einzusetzen, wobei beispielsweise zur Entfernung von im Metall gelösten, oxidierbaren Substanzen (beispielsweise Schwefel, Kohlenstoff und dergleiche) über die Kanäle 25 ein geeignetes oxidierendes Gas zugeführt werden kann. Feste Verunreinigungen können mittels eines über die Kanäle 25 zugeführten Lösungsmittels entfernt werden.

Umgekehrt ist es natürlich ebenfalls möglich, ein durch die Poren des Keramikkörpers 17 fließendes Substrat über die Kanäle 25 mit einem reduzierenden Reaktanden in Berührung zu bringen. Neben der Umsetzung von Verunreinigungen ist es auch möglich, den Keramikkörper 17 als Reaktor zu betreiben, in dem geeignete Reaktanden in dessen Porensystem gezielt zur Reaktion gebracht werden.

Die Anlegung und der jeweilige Anschluß entsprechender Kanäle an zugeordnete Zuführvorrichtungen macht es so möglich, auch verschiedene Reaktanden in zeitlicher Aufeinanderfolge mit Substraten zur Reaktion zu bringen, indem man mittels in Flußrichtung stromaufwärts liegenden Kanälen Reaktanden zuführt, die mit dem durchströmenden Fluid zuerst zur Reaktion gebracht werden und das Reaktionsprodukt sodann über in Flußrichtung stromabwärts liegende weitere Kanäle 25 mit anderen Substanzen zur Reaktion bringt.

Die Porensysteme des erfindungsgemäßen Keramikkörpers eignen sich weiterhin insbesondere auch für katalytische Reaktionen, bei denen man Katalysatorsubstanzen in das Porensystem einbringt und dort über die Porensysteme 18, 19 und die Kanäle 25 gezielt mit Reaktanden beschickt.

**Patentansprüche**

1. Verfahren zur Herstellung offenporiger Keramik körper, bei welchem man auf die Begrenzungsflächen der Poren eines offenporigen Matrix-Körpers eine verfestigbare Keramikmasse aufbringt, diese nachfolgend verfestigt und den Matrix-Körper unter Zurückbleiben eines Keramikkörpers aus verfestigter, offenporiger Keramikmasse entfernt, dadurch gekennzeichnet, daß man den Matrix-Körper (10) vor Aushärten der Keramikmasse (15) mit sich in diesen wenigstens in einer Raumrichtung hinein erstreckenden Filamenten versieht, die man während oder nach Aushärten der Keramikmasse (15) unter Bildung entsprechender Kanäle (25) entfernt.

2. Verfahren nach Anspruch 1, bei welchem man den Matrix-Körper in eine flüssige Keramikmasse eintaucht, überschüssige Keramikmasse entfernt, die im Matrix-Körper verbliebene Keramikmasse verfestigt und den Matrix-Körper entfernt, dadurch gekennzeichnet, daß man die Filamente (21) vor Eintauchen des Matrix-Körpers (10) in die flüssige Keramikmasse in diesen einbringt.

3. Verfahren nach Anspruch 1 oder 2, bei welchem man einen offenporigen Matrix-Körper aus Kunststoff oder Kunstharz mit in diesem eingebrachter Keramikmasse unter Zurückbleiben eines offenporigen Keramikkörpers verdampft bzw. thermisch zersetzt, dadurch gekennzeichnet, daß man den Matrix-Körper (10) vor Einbringen der Keramikmasse (15) mit Filamenten, vorzugsweise mit Fäden (22) aus thermisch verflüchtigbarem bzw. zu gasförmigen Produkten zersetzbarem Material durchzieht.

4. Verfahren nach einem der Ansprüche 1 bis 3, dadurch gekennzeichnet, daß man Filamente bzw. Fäden (22) aus thermisch in gasförmige Produkte überführbarem Synthetikmaterial, vorzugsweise Polyäthylen, Polyäther, Polyamid, Polyester oder ähnlichem verwendet.

5. Verfahren nach einem der Ansprüche 1 bis 3, dadurch gekennzeichnet, daß man Filamente bzw. Fäden (22) aus thermisch unter Zersetzung entfernbaren Naturfasern, vorzugsweise Baumwolle bzw. andere zellulosehaltige Fasern oder Wolle bzw. andere keratinöse Fasern verwendet.

6. Verfahren nach einem der Ansprüche 1 bis 3, dadurch gekennzeichnet, daß man als Filamente Metalldrähte (23) verwendet und diese nach Verfestigung der Keramikmasse (15), vorzugsweise unter Verwendung von die Keramikmasse (15) nicht angreifender Säure, auflöst.

7. Verfahren nach einem der Ansprüche 1 bis 3, dadurch gekennzeichnet, daß man als Filamente Drähte oder Stäbe (24) verwendet, an denen die verfestigte Keramikmasse (15) nicht in störendem Umfang haftet, und diese nach Verfestigung der Keramikmasse (15) aus dem Keramikkörper (17) herauszieht.

8. Verfahren nach einem der Ansprüche 1 bis 7, dadurch gekennzeichnet, daß man nebeneinander Filamente, Fäden (22) und/oder Drähte (23, 24) unterschiedlicher Stärke und gegebenenfalls unterschiedlichen Materials verwendet.

9. Verfahren nach einem der Ansprüche 1 bis 8, dadurch gekennzeichnet, daß man zur Bildung unterschiedlicher Kanalsysteme den Matrix-Körper (10) mit sich in unterschiedlichen Raumrichtungen erstreckenden Filamenten, Fäden (22) und/oder Drähten (23, 24) gleicher oder unterschiedlicher Stärke versieht.

10. Offenporiger Keramikkörper, mit einem ersten Porensystem, welches im wesentlichen dem offenen Porensystem eines Matrix-Körpers entspricht und mit der Umgebung kommuniziert und einem zweiten Porensystem, welches den bei Entfernung des Matrix-Körpermaterials entstehenden Hohlräumen entspricht, gekennzeichnet durch wenigstens einen ihn im wesentlichen durchsetzenden, durch Entfernen eines vor Verfestigung der ihn bildenden Keramikmasse (15) eingeführten Filaments, Fadens (22) oder Drahtes (23, 24) während oder nach der Verfestigung der Keramikmasse (15) gebildeten Kanal (25), der mit dem zweiten Porensystem (19) kommuniziert.

11. Offenporiger Keramikkörper nach Anspruch 10, gekennzeichnet durch das erste mit dem zweiten Porensystem (18 bzw. 19) und den Kanälen (25) verbindende Durchtrittsöffnungen (20).

12. Verwendung eines offenporigen Keramikkörpers nach Anspruch 10 oder 11 zur Reinigung von Gasen, insbesondere, indem man ein zu reinigendes Gas in wenigstens das erste Porensystem (18) eintreten läßt, wenigstens dem zweiten Porensystem (19) über mindestens einen Kanal (25) ein Reinigungsfluid zuführt und dieses mit dem Gas im ersten Porensystem (18) in innige Berührung bringt.

13. Verwendung eines offenporigen Keramikkörpers nach Anspruch 10 oder 11 zur Reinigung oder Umsetzung einer fluiden metallischen Substanz.

14. Verwendung eines offenporigen Keramikkörpers nach Anspruch 10 oder 11 zur chemischen Umsetzung von fluiden Substanzen, insbesondere durch Zusetzen von Reaktanden entsprechend Anspruch 12.

15. Verwendung eines offenporigen Keramikkörpers nach Anspruch 10 oder 11 zur katalytischen Umsetzung fluider Substanzen, insbesondere unter bzw. nach Einbringung von Katalysatorsubstanzen in wenigstens ein Porensystem (18, 19).

**Revendications**

1. Procédé de préparation de corps céramiques à pores ouverts, dans lequel on applique sur les surfaces limites des pores d'un corps de matrice à pores ouverts une masse céramique solidifiable, on solidifie celle-ci ensuite et on élimine le corps de matrice en laissant subsister un corps céramique à base d'une masse céramique à pores ouverts, solidifiée, caractérisé en ce que, avant le durcissage de la masse céramique (15), on garnit le corps de matrice (10) de filaments qui s'étendent dans ce corps au moins suivant une direction spatiale et qu'on élimine, pendant ou après le durcissage de la masse céramique (15), avec formation de canaux correspondants (25).

2. Procédé suivant la revendication 1, dans lequel on plonge le corps de matrice dans une masse céramique fluide, on élimine la masse céramique excédentaire, on solidifie la masse céramique restée dans le corps de matrice et on élimine le corps de matrice, caractérisé en ce qu'on introduit les filaments dans le corps de matrice (10) avant de plonger celui-ci dans la masse céramique fluide.

3. Procédé suivant l'une ou l'autre des revendications 1 et 2, dans lequel on évapore ou respectivement décompose par voie thermique un corps de matrice à pores ouverts en matière synthétique ou en résine synthétique présentant une masse céramique introduite dans ce corps, tout en laissant subsister un corps céramique à pores ouverts, caractérisé en ce que, avant l'introduction de la masse céramique (15), on traverse le corps de matrice (10) par des filaments, de préférence par des fils (22) en une matière thermiquement volatilisable ou décomposable en produits gazeux.

4. Procédé suivant l'une des revendications 1 à 3, caractérisé en ce qu'on utilise des filaments ou fils (22) en une matière synthétique thermiquement convertissable en produits gazeux, de préférence en polyéthylène, en polyéther, en polyamide, en polyester ou en une matière analogue.

5. Procédé suivant l'une des revendications 1 à 3, caractérisé en ce qu'on utilise des filaments ou fils (22) en fibres naturelles thermiquement éliminables par décomposition, de préférence en coton ou en d'autres fibres contenant de la cellulose, ou en laine ou en d'autres fibres de kératine.

6. Procédé suivant l'une des revendications 1 à 3, caractérisé en ce que, comme filaments, on utilise des fils métalliques (23) et en ce qu'on dissout ceux-ci, après solidification de la masse céramique (15), de préférence par utilisation d'un acide qui n'attaque pas la masse céramique (15).

7. Procédé suivant l'une des revendications 1 à 3, caractérisé en ce que, comme filaments, on utilise des fils ou barres (24) sur lesquels la masse céramique solidifiée (15) n'adhère pas à un degré perturbateur et en ce qu'on ôte ceux-ci du corps céramique (17), après solidification de la masse céramique (15).

8. Procédé suivant l'une des revendications 1 à 7, caractérisé en ce qu'on utilise les uns à côté des autres des filaments, des fils (22) et/ou des fils métalliques (23, 24) présentant des épaisseurs différentes et éventuellement en une matière différente.

9. Procédé suivant l'une des revendications 1 à 8, caractérisé en ce que, pour la formation de différents systèmes de canaux, on pourvoit le corps de matrice (10) de filaments, fils (22) et/ou fils métalliques (23, 24) qui s'étendent dans différentes directions spatiales et qui ont la même épaisseur ou une épaisseur différente.

10. Corps cérammique à pores ouverts, comprenant un premier système de pores, qui correspond sensiblement au système de pores ouverts d'un corps de matrice, et qui communique avec l'environnement, et un deuxième système de pores, qui correspond aux cavités formées lors de l'élimination du corps de matrice, caractérisé par au moins un canal (25) qui le traverse sensiblement, est formé, pendant ou après la solidification de la masse céramique (15), par élimination d'un filament, fil (22) ou fil métallique (23, 24) introduit avant la solidification de la masse céramique (15) qui le forme, et communique avec le deuxième système de pores (19).

11. Corps céramique à pores ouverts suivant la revendication 10, caractérisé par des ouvertures de passage (20) qui relient le premier système de pores au deuxième (18 et respectivement 19) et les canaux (25).

12. Utilisation d'un corps céramique à pores ouverts suivant l'une des revendications 10 et 11 pour purifier des gaz, en particulier en laissant entrer un gaz à purifier dans au moins le premier système de pores (18), en amenant un fluide de purification au moins au deuxième système de pores (19) par l'intermédiaire d'au moins un canal (25) et en amenant ce dernier en contact intime avec le gaz dans le premier système de pores (18).

13. Utilisation d'un corps céramique à pores ouverts suivant l'une des revendications 10 et 11, pour la purification ou la transformation d'une substance métallique fluide.

14. Utilisation d'un corps céramique à pores ouverts suivant l'une des revendications 10 et 11, pour la réaction chimique de substances fluides, en particulier par addition de réactifs conformément à la revendication 12.

15. Utilisation d'un corps céramique à pores ouverts suivant l'une des revendications 10 et 11, pour la réaction catalytique de substances fluides, en particulier avec ou après introduction de substances catalytiques dans au moins un système de pores (18, 19).

**Claims**

1. Process for the production of open-pore ceramic bodies, in which a solidifiable ceramic mass is applied to the boundary surfaces of an open-pore matrix member, this mass is thereafter solidifed and the matrix member is removed, leaving behind a ceramic body of solidified, open-pore ceramic mass, characterised in that the matrix member (10) is provided, prior to the final hardening of the ceramic mass (15), with filaments which extend in this member, at least in one spatial direction, which filaments are removed during or after final hardening of the ceramic mass (15), with formation of corresponding channels (25).

2. Process according to claim 1, in which the matrix member is dipped into a liquid ceramic mass, excess ceramic mass is removed, the ceramic mass remaining in the matrix member is solidified and the matrix member is removed, characterised in that the filaments (21) are introduced into the matrix member (10) before the latter is introduced into the liquid ceramic mass.

3. Process according to claim 1 or 2, in which an open-pore matrix member of synthetic plastics or synthetic resin with ceramic mass introduced into said member is vaporised or thermally decomposed, leaving behind an open-pore ceramic body, characterised in that filaments, advantageously threads (22), of material which can be volatilised by heat or decomposed to gaseous products, are drawn through the matrix member (10) before introduction of the ceramic mass (15).

4. Process according to one of the claims 1 to 3, characterised by the use of filaments or threads (22) of synthetic material which can be converted by heat into gaseous products, advantageously polyethylene, polyether, polyamide, polyester or the like.

5. Process according to one of the claims 1 to 3, characterised by the use of filaments or threads (22) of natural fibres which can be removed by heat with decomposition, advantageously cotton or other cellulose-containing fibres, or wool or other keratinous fibres.

6. Process according to one of the claims 1 to 3, characterised in that metal wires (23) are used as filaments, and these wires are dissolved after solidification of the ceramic mass (15), advantageously with use of acid not attacking the ceramic mass (15).

7. Process according to one of the claims 1 to 3, characterised in that, as filaments, there are used wires or rods (24) on which the solidified ceramic mass (15) does not adhere to a disturbing degree, and these filaments are withdrawn from the ceramic body (17) after solidification of the ceramic mass (15).

8. Process according to one of the claims 1 to 7, characterised in that filaments, threads (22) and/or wires (23, 24) of different thickness and possibly of different material are used side by side.

9. Process according to one of the claims 1 to 8, characterised in that, for the formation of different passage systems, the matrix body (10) is provided with filaments, threads (22) and/or wires (23, 24) of like or different thickness extending in different spatial directions.

10. Open-pore ceramic body, with a first pore system, which corresponds substantially to the open-pore system of a matrix member and communicates with the surroundings and a second pore system, which corresponds to those cavities being formed with removal of the matrix body material, characterised by at least one passage (25), essentially extending through it and formed by removing a filament, thread (22) or wire (23, 24) introduced prior to the setting of the ceramic mass (15) forming it, during or after the solidification of the ceramic mass (15), which passage communicates with the second pore system (19).

11. Open-pore ceramic body according to claim 10, characterised by passage openings (20) connecting the first with the second pore system (18 and 19, respectively) and the passages (25).

12. Use of an open-pore ceramic body according to claim 10 or 11, for the cleansing of gases, more especially by a gas to be cleansed being allowed to enter into at least the first pore system, supplying a cleansing fluid to the second pore system (19) by way of at least one passage (25) and bringing this fluid into intimate contact with the gas in the first pore system (18).

13. Use of an open-pore ceramic body according to claim 10 or 11, for cleansing or transforming a fluid metallic substance.

14. Use of an open-pore ceramic body according to claim 10 or 11 for the chemical reaction of fluid substances, more especially by adding reactants according to claim 12.

15. Use of an open-pore ceramic body according to claim 10 or 11 for the catalytic reaction of fluid substances, more especially with or after introducing catalyst substances into at least one pore system (18, 19).

FIG. 1a

FIG. 1 b

FIG. 1 c

FIG. 2

FIG. 3 a

FIG. 3 b

FIG. 4